Europäisches Patentamt

**European Patent Office**

**Office européen des brevets**

(11) Numéro de publication: **0 241 326 B1**

(12) **FASCICULE DE BREVET EUROPEEN**

(45) Date de publication de fascicule du brevet:
**15.01.92**

(21) Numéro de dépôt: **87400518.4**

(22) Date de dépôt: **10.03.87**

(51) Int. Cl.⁵: **H02M 7/5387**, H02M 7/527, H02P 5/408, H02P 7/62

(54) **Procédé de commande d'un onduleur à modulation de largeur par impulsions, associé à un moteur à N phases et dispositif de mise en oeuvre du procédé.**

(30) Priorité: **11.03.86 FR 8603420**

(43) Date de publication de la demande:
**14.10.87 Bulletin 87/42**

(45) Mention de la délivrance du brevet:
**15.01.92 Bulletin 92/03**

(84) Etats contractants désignés:
**CH DE GB IT LI SE**

(56) Documents cités:
**EP-A- 0 102 614**
**US-A- 4 002 958**
**US-A- 4 467 262**

(73) Titulaire: **TELEMECANIQUE**
**43-45, Boulevard Franklin Roosevelt**
**F-92504 Rueil-Malmaison Cedex(FR)**

(72) Inventeur: **Pournain, Michel**
**16, rue des Ecoles Saubens**
**F-31600 Muret(FR)**

(74) Mandataire: **de Saint-Palais, Arnaud Marie et al**
**CABINET MOUTARD 35, Avenue Victor Hugo**
**F-78960 Voisins le Bretonneux(FR)**

Rank Xerox (UK) Business Services

## Description

La présente invention concerne un procédé de commande d'un onduleur à modulation de largeur par impulsions, à N bras, associé à un moteur à N phases connectées en étoile avec neutre non relié, permettant de réduire la puissance dissipée dans ses interrupteurs de puissance.

Un onduleur à modulation de largeur par impulsions (M.L.I.) tel que, par exemple, celui qui est décrit dans le brevet US 4 467 262, a pour but de commander un moteur à N phases ou enroulements en créant un champ tournant à partir de N courants périodiques. Il est constitué par N groupes de 2 interrupteurs qui alimentent, par des créneaux de tension modulés en largeur, les phases du moteur. Un asservissement de courant sur chacune des phases permet de reconstituer N courants déphasés de $360°/N$. Lors de la commande de ces interrupteurs, la puissance dissipée dans chacun d'eux correspond à la somme des pertes de conduction et des pertes de commutation. Les pertes de conduction correspondent au produit de la tension résiduelle de conduction de l'interrupteur par le courant le traversant. Les pertes de commutation correspondent à l'énergie perdue à chaque commutation en raison des temps d'ouverture et de fermeture des interrupteurs.

Le but du procédé de commande de l'onduleur selon l'invention est de réduire cette pussance dissipée en supprimant les pertes de commutation dans l'interrupteur alimentant l'enroulement du moteur où circule le courant maximum. Cette réduction est obtenue en maintenant cet interrupteur en conduction permanente de telle sorte qu'il ne subsiste que les pertes de conduction. Le courant dans la phase correspondante du moteur est alors régulé à l'aide des N-1 autres phases, la somme des N courants étant nulle dans une machine connectée en étoile et dont le neutre n'est pas relié.

Pour cela l'objet de l'invention est tout d'abord un procédé de commande d'un onduleur M.L.I., à N bras, associé à un moteur, réalisant la détection de l'enroulement du moteur dans lequel le courant est maximum et maintenant en conduction l'un des deux interrupteurs de l'onduleur, associé à cet enroulement du moteur.

Plus précisément, l'objet de l'invention est un procédé de commande, en fonction des caractéristiques électriques d'un moteur et de son mode de fonctionnement, d'un onduleur à modulation de largeur à N bras - N entier supérieur à deux -, associé à un moteur, lequel est connecté en étoile avec neutre non relié, comportant les étapes a et b suivantes :

a) établissement des N courants de référence, i entier variant de 1 à N, respectivement affectés aux N enroulements du moteur ;

b) établissement des signaux de conduction de chacun des deux interrupteurs haut et bas de l'onduleur associés à chaque enroulement du moteur, suivant une stratégie de découpage par impulsions modulées en largeur, en fonction des écarts, entre le courant réellement mesuré dans les enroulements et les courants de référence correspondants et caractérisé en ce qu'il comporte les étapes supplémentaires c et d suivantes :

c) détection de l'enroulement du moteur dans lequel la valeur absolue du courant instantané de référence est maximale ;

d) transmission d'une commande de maintien en conduction à l'interrupteur haut ou bas de l'onduleur associé à l'enroulement du moteur dans lequel courant maximal en valeur absolue est détecté, le courant circulant dans cet enroulement est alors régulé par les N-1 autres bras

L'objet de l'invention est aussi un dispositif de commande mettant en oeuvre le procédé ci-dessus, appliqué à un moteur synchrone.

Une modification du procédé est revendiqué dans la revendication 3.

D'autres caractéristiques et avantages de l'invention apparaîtront à la lumière de la description des exemples de réalisation non limitatifs illustrés par les figures suivantes :

- la figure 1 : un schéma synoptique d'un dispositif de commande d'un onduleur triphasé selon l'invention ;
- les figures 2a et 2b : les variations en fonction du temps des courants de référence devant passer dans les trois enroulements d'un moteur synchrone, associé à un onduleur triphasé, pour une vitesse constante et un couple constant appliqué au rotor ;
- la figure 3a : les variations en fonction du temps des courants passant dans les phases d'un moteur synchrone associé à un onduleur triphasé commandé selon l'invention, lors d'un cycle de freinage puis d'accélération ;
- la figure 3b : les signaux de conduction des interrupteurs de l'onduleur commandé selon l'invention ;
- la figure 4 : un mode de réalisation non limitatif d'un dispositif de commande selon l'invention.

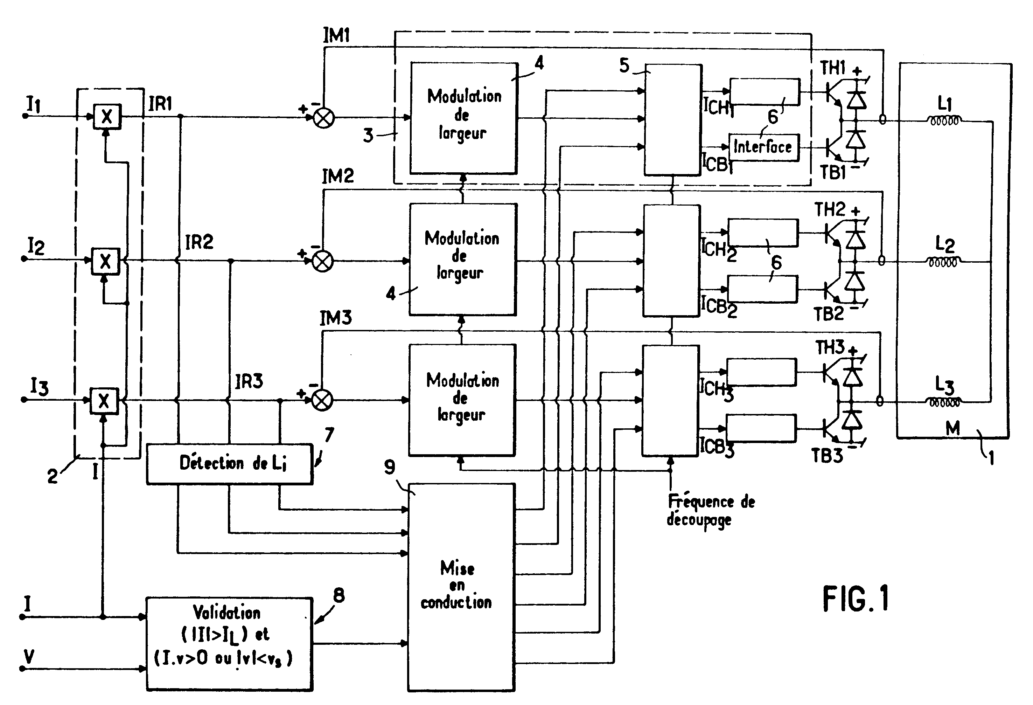

Comme énoncé précédemment, et dans l'exemple non limitatif d'un onduleur triphasé, le procédé de commande d'un onduleur triphasé, associé à un moteur synchrone 1 à trois phases ou enroulements $L_1$, $L_2$ et $L_3$ consiste tout d'abord à partir de la consigne de courant I à lui appliquer et de moyens 2, à établir trois courants $I_{R1}$, $I_{R2}$ et $I_{R3}$ à faire passer dans les trois enroulements $L_1$, $L_2$ et $L_3$ du moteur 1. Pour cela, le dispositif de mise en oeuvre du procédé comporte tout d'abord, comme le montre la figure 1, les moyens 2 d'établissement des courants. De façon classique, ces moyens 2 consistent à établir trois courants $I_{R1}$, $I_{R2}$ et $I_{R3}$ simusoïdaux, dans l'exemple choisi, fonction de l'angle $\theta$ du rotor, à amplitude constante A et déphasés deux à deux de 2 Π/N soit 2 Π/3, puis à multiplier l'amplitude A de ces courants par la consigne de courant I. En sortie des moyens 2, on obtient les trois courants suivants :

$I_{R1}$ = AI Sin $\theta$

$I_{R2}$ = AI Sin ( $\theta$ + $2\pi/3$ )

$I_{R3}$ = AI Sin ( $\theta$ + $4\pi/3$ )

Le dispositif de commande comporte ensuite des moyens 3 d'établissement des signaux de conduction CHi et CBi - i étant un entier variant de 1 à 3 - respectivement de chacun des deux interrupteurs haut $T_{Hi}$ et bas $T_{Bi}$ de l'onduleur, associés à chaque enroulement $L_i$ du moteur. Dans l'exemple choisi, chaque interrupteur est constitué par un transistor. Pour chaque enroulement $L_i$ du moteur, ces moyens 3 sont constitués par des moyens 4 de modulation de largeur à fréquence fixe, qui reçoivent en entrée la différence entre le courant $I_{Mi}$ réellement mesuré dans l'enroulement $L_i$ et le courant de référence $I_{Ri}$ et qui sont connectés en sortie, chacun, à des moyens 5 qui éliminent les impulsions multiples à l'intérieur d'une période de modulation. Entre chacun des moyens 5, réalisés par exemple par une bascule du type RS, et chaque interrupteur de l'onduleur est placé un circuit d'interface 6. Les signaux de conduction des transistors ont la forme d'impulsions rectangulaires de largeur variable.

Pour commander selon la stratégie de l'invention, le dispositif comporte de plus des moyens 7 de détection de l'enroulement $L_i$ du moteur dans lequel la valeur absolue du courant instantané de référence est maximale. Cette détection est réalisée à partir du signe des courants dans les différentes phases du moteur comme le montre la figure 1. Il comporte également des moyens 8 de validation du procédé de commande pour moteur synchrone, effectuant la comparaison de la valeur absolue de la consigne de courant | I | avec un seuil minimum $I_L$ déterminé et la comparaison de la valeur absolue de la vitesse du rotor | v | avec un seuil maximum $v_S$ déterminé quand le moteur est en freinage. En dessous d'une valeur limite $I_L$ du courant, le procédé de commande ne peut pas s'appliquer car le rapport cyclique de conduction devient inférieur au temps d'ouverture et de fermeture des interrupteurs. Lorsque le moteur fonctionne un alternateur, c'est-à-dire est en freinage, le procédé ne peut s'appliquer que lorsque la force électromotrice du moteur est inférieure à la chute de tension ohmique dans les phases soit en dessous d'une vitesse limite $v_S$.

Les moyens de détection 7 et de l'enroulement $L_i$ du moteur où le courant est maximum et les moyens de validation 8 du procédé sont connectés aux entrées des moyens 9 destiner à maintenir en conduction l'interrupteur de l'onduleur associé à cet enroulement $L_i$. Ces moyens 9 reçoivent donc en entrée d'une part les informations sur l'enroulement du moteur où circule le courant maximum, délivrés par les moyens de détection 7 et d'autre part les signaux de validation issus des moyens 8. Les moyens 9 envoient une information de maintien en conduction à l'interrupteur de l'onduleur lorsque les conditions : | I | > $I_L$ et en cas de freinage | v | < $V_s$ sont remplies. Le freinage est déterminé par comparaison entre les signes de la vitesse V et de la consigne du courant I. Ces ordres de maintien en conduction sont envoyés à l'interrupteur $T_{Hi}$ ou $T_{Bi}$ déterminé, par l'intermédiaire des moyens 5 et des circuits d'interface 6. Dans un exemple particulier de réalisation, ces moyens 9 de maintien en conduction sont constitués par un circuit décodeur binaire-décimal recevant en entrée les codes binaires définissant la position angulaire $\theta$ du rotor et l'ordre de validation du procédé de commande.

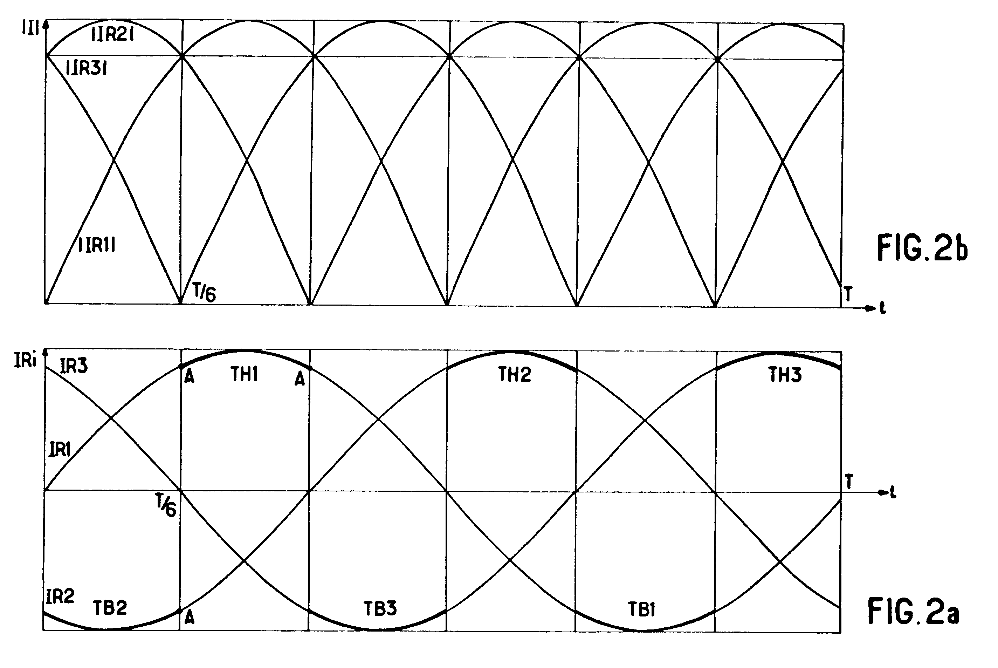

La figure 2a représente la variation sur une période T, en fonction du temps, des courants de référence $I_{R1}$ à $I_{R3}$ devant passer dans les enroulements d'un moteur triphasé synchrone à vitesse et couple constants. On constate que ces trois courants simusoïdaux, sur chaque sixième de période T/6, sont tels qu'un seul n'a pas le même signe que les autres et c'est précisément celui dont l'amplitude en valeur absolue | $I_{Ri}$ | est maximale (figure 2b). Sur la figure 2a est représenté en trait fort le courant dans l'enroulement $L_i$ du moteur associé à l'interrupteur de l'onduleur forcé en conduction. Le choix des interrupteurs haut $T_{Hi}$ ou bas $T_{Bi}$ forcés en condition est réalisé suivant la phase des courants.

Les pertes de commutation maximales de l'interrupteur ne sont plus situées au point où le courant est maximum dans la phase, mais pour un courant $I_M$ • $\sqrt{3}/2$ (point A). Le gradient de courant en ce point est important, ce qui minimise la durée de dissipation de l'énergie lors de la rotation du moteur.

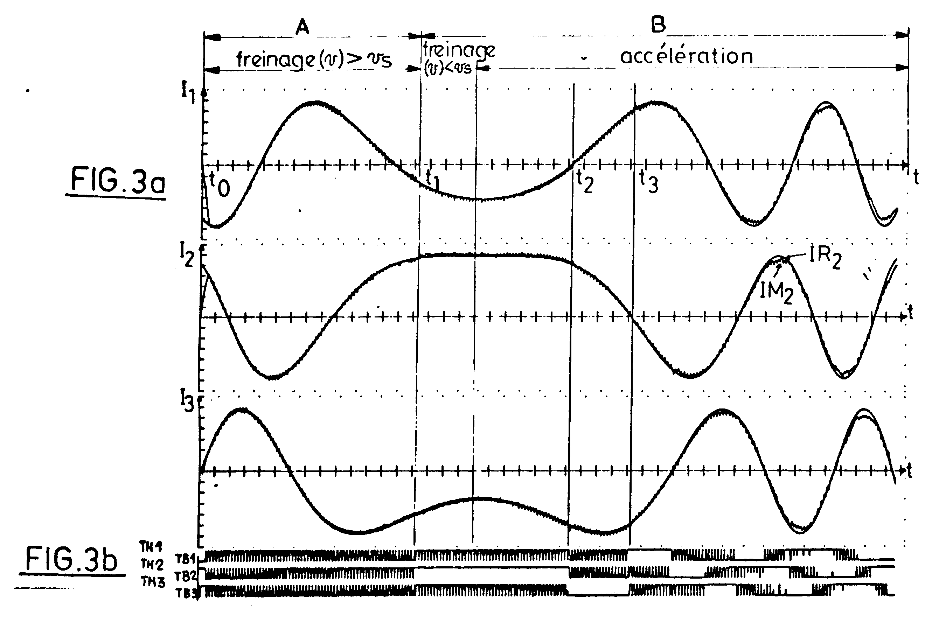

Sur la figure 3a sont représentées les variations en fonction du temps des courants $I_M$ passant dans les enroulements d'un moteur synchrone triphasé commandé selon la stratégie de l'invention lors d'un cycle de freinage puis d'accélération et sur la figure 3b sont représentés les signaux de conduction CHi et CBi, i variant de 1 à 3, des transistors haut et bas d'un onduleur triphasé, respectivement pour les enroulements $L_1$ à $L_3$. Dans

la partie 1 du diagramme entre les instants $t_0$ et $t_1$, la commande des interrupteurs se fait selon une stratégie triphasée classique, les critères de validation du procédé de commande n'étant pas respectés, c'est-à-dire qu'alternativement tous les interrupteurs conduisent et sont bloqués. Dans la partie B est appliquée la stratégie selon l'invention, c'est-à-dire que sont maintenus en conduction les interrupteurs haut $TH_i$ ou bas $TB_i$ associés à l'enroulement $L_i$ où circule le courant maximum. Ainsi, entre les instants $t_1$ et $t_2$ où le courant $I_{M2}$ est maximum et de signe positif, dans l'enroulement $L_2$ (figure 3a), l'interrupteur haut $TH_2$ est en conduction et l'interrupteur bas $TB_2$ est bloqué ; entre les instants $t_2$ et $t_3$, le courant $I_{M3}$ est maximum en valeur absolue mais de signe négatif de sorte que l'interrupteur haut $T_{H3}$ est bloqué et l'interrupteur bas $TB_3$ conduit.

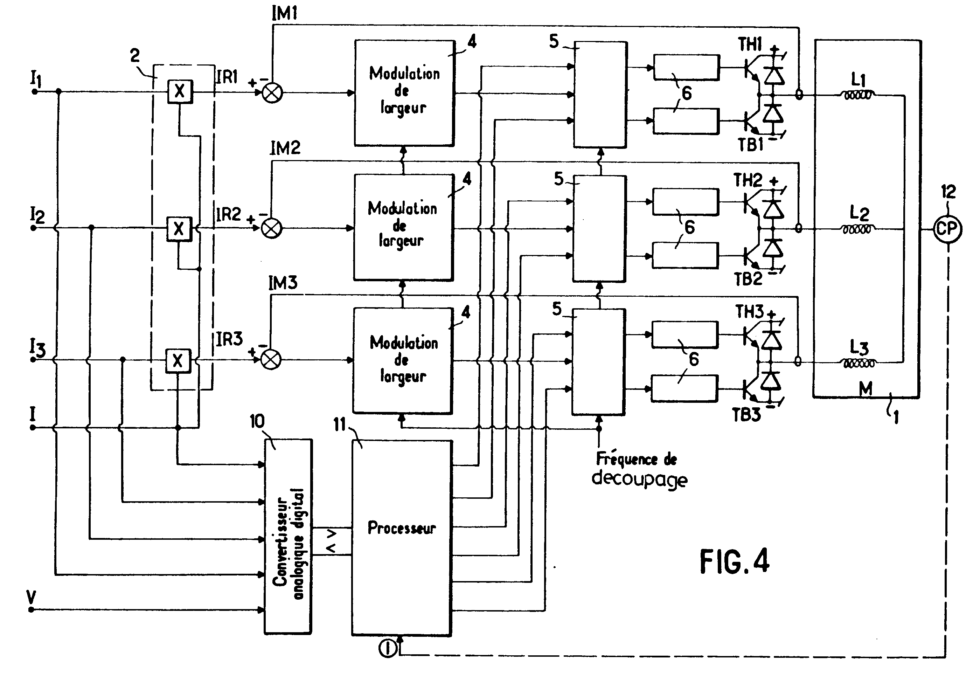

La figure 4 montre un mode de réalisation particulier mais non limitatif d'un dispositif de commande selon l'invention, toujours dans le cas d'un onduleur triphasé.

Dans ce mode de réalisation, le dispositif comporte un processeur 11, équipé d'un convertisseur 10 analogique numérique, remplissant à la fois la fonction de détection de l'enroulement du moteur dans lequel circule le courant maximum et la fonction de validation du procédé de commande. Le convertisseur analogique numérique 10, connecté à l'entrée du processeur 11, reçoit d'une part les valeurs des courants circulant dans au moins deux phases du moteur, ou bien la position angulaire du rotor donnée par un capteur de position (12) et d'autre part la valeur de la consigne de courant I appliquée au moteur et la valeur de la vitesse de rotation du rotor. Ce convertisseur transforme ces données analogiques en informations binaires qu'il transmet au processeur. Ce dernier transmet ensuite les signaux de mise en conduction aux interrupteurs suivant le procédé de commande selon l'invention.

**Revendications**

**1.** Procédé de commande, enfonction des caractéristiques électriques d'un moteur et de son mode de fonctionnement, d'un onduleur à modulation de largeur par impulsions à N bras - N entier supérieur à deux -, associé audit moteur, lequel est connecté en étoile avec neutre non relié, comportant les étapes a et b suivantes :

    a) établissement de N courants de référence ($I_{Ri}$), i entier variant de 1 à N, respectivement affectés aux N enroulements ($L_i$) du moteur (1) ;
    b) établissement des signaux de conduction ($C_{Hi}$ et $C_{Bi}$) de chacun des deux interrupteurs haut ($T_{Hi}$) et bas ($T_{Bi}$) de l'onduleur associés à chaque enroulement ($L_i$) du moteur (1), suivant une stratégie de découpage par impulsions modulées en largeur en fonction de l'écart entre le courant réellement mesuré dans les enroulements et les courants de référence correspondants,

caractérisé en ce qu il comporte les étapes supplémentaires c et d suivantes :

    c) détection de l'enroulement ($L_i$) du moteur dans lequel la valeur absolue du courant instantané de référence ($I_{Ri}$) est maximale ;
    d) transmission d'une commande de maintien en conduction à l'interrupteur haut ($T_{Hi}$) ou bas ($T_{Bi}$) de l'onduleur associé à l'enroulement ($L_i$) du moteur (1) dans lequel un courant maximum en valeur absolue est détecté, le courant circulant dans cet enroulement étant alors régulé par les N-1 autres bras.

**2.** Procédé de commande selon la revendication 1, caractérisé en ce que dans l'étape c, la détection de l'enroulement dans lequel circule un courant est maximale en valeur absolue, est réalisée à partir du signe des courants dans les différents enroulements du moteur (1).

**3.** Procédé de commande selon le preambul de la revendication 1, d'un onduleur associé à un moteur synchrone, avec l'étape b) et l'étape a) modifiée comme suit :

    a) où l'établissement des N courants de référence ($I_{Ri}$) a lieu en fonction de la consigne de courant (I) à appliquer au rotor, et l'étape b,

caractérisé en ce qu'il comporte les étapes c, $c_1$ et d suivantes :

    c) détection de l'enroulement ($L_i$) du moteur dans lequel la valeur absolue du courant instantané est maximale en fonction de la position angulaire ($\theta$) du rotor ;
    $c_1$) validation du procédé de commande après comparaison de la valeur absolue de la consigne de courant ($|I|$) avec un seuil minimum ($I_L$) déterminé et comparaison de la valeur absolue de la vitesse du rotor ($|v|$) avec un seuil maximum ($v_S$) déterminé quand le moteur est en freinage, le freinage étant déterminé par comparaison entre les signes de la vitesse (v) et de la consigne de courant (I) ;

d) transmission d'une commande de maintien en conduction de l'interrupteur haut ($T_{Hi}$) ou bas ($T_{Bi}$) de l'onduleur associé à l'enroulement ($L_i$) du moteur (1) dans lequel un courant maximum en valeur absolue est détecté, le courant étant alors régulé par les N-1 autres bras.

4. Procédé de commande selon la revendication 3, caractérisé en ce que dans l'étape c, la détection de la phase où la valeur absolue du courant est maximale, est réalisée par un capteur de position angulaire (12) du rotor.

5. Dispositif de commande d'un onduleur à modulation de largeur par impulsions à N phases, N étant un entier supérieur à deux, associé à un moteur (1) synchrone, comportant :

- des moyens (2) d'établissement des N courants de référence ($I_{Ri}$) -i étant un entier variant de 1 à N-, à faire passer dans les N enroulements ($L_i$) du moteur, à partir de la consigne de courant (I) à lui appliquer ;
- des moyens (3) d'établissement des signaux de conduction ($C_{Hi}$ et $C_{Bi}$) de chacun des deux interrupteurs haut et bas ($T_{Bi}$) de l'onduleur associé à chaque enroulement ($L_i$) du moteur ($T_{Hi}$) ;

caractérisé en ce qu'il comporte de plus :

- des moyens (7) de détection de l'enroulement ($L_i$) du moteur dans lequel la valeur absolue du courant instantané de référence ($I_{Ri}$) est maximale, en fonction de la position angulaire ($\theta$) du rotor ;
- des moyens de validation (8) du procédé de commande effectuant la comparaison de la valeur absolue de la consigne de courant ($|I|$) avec un seuil maximum ($I_1$) déterminé et la comparaison de la valeur absolue ($|v|$) de la vitesse du rotor avec un seuil maximum ($v_s$) quand le moteur est en freinage, le freinage étant détecté par comparaison du signe de la consigne du courant et du signe de la vitesse ;
- des moyens permettant d'effectuer un maintien en conduction de l'interrupteur haut ($T_{Hi}$) ou bas ( $T_{Bi}$) de l'onduleur associé à l'enroulement ($L_i$) du moteur, dans lequel un courant maximum est détecté.

6. Dispositif de commande selon les revendications 5, caractérisé en ce que les moyens (7) de détection fonctionnent à partir du signe des courants dans les différents enroulements ($L_i$) du moteur.

7. Dispositif de commande selon les revendications 5 ou 6, caractérisé en ce que les moyens (9) de maintien en conduction sont constitués par un circuit décodeur binaire-décimal recevant en entrée les codes binaires définissant les signes des courants du rotor et l'ordre de validation du procédé de commande.

8. Dispositif de commande selon l'une des revendications 5 à 7, caractérisé en ce qu'il comporte de plus un processeur (11) effectuant la détection de l'enroulement ($L_i$) du moteur dans lequel circule le courant maximum et la validation du procédé de commande, associé à un convertisseur analogique-numérique (10), le convertisseur recevant en entrée les valeurs des courants de référence d'au moins deux enroulements du moteur (1), la valeur de la consigne de courant (I) et la valeur de la vitesse de rotation du rotor, et le processeur (11) transmettant les signaux de mise en conduction aux interrupteurs ($T_{Hi}$ et $T_{Bi}$) suivant le procédé de commande.

9. Dispositif de commande selon la revendication 8 utilisée pour un moteur synchrone, caractérisé en ce que la détection de l'enroulement où le courant est maximum, est réalisé par un capteur (12) effectuant une détection de la position angulaire du rotor du moteur, ce capteur étant relié directement au processeur.

**Claims**

1. Method for the control, as a function of the electric characteristics of a motor and its operating mode, of a pulse width modulation inverter, with N arms - N being a whole number greater than 2 - associated with said motor, which is connected in a star arrangement with unconnected neutral, comprising the following steps a) and b) :

a) establishment of N reference currents ($I_{Ri}$), i being an integer varying from 1 to N, respectively assigned to the N windings ($L_i$) of the motor (1);

b) establishment of the conduction signals ($C_{Hi}$ and $C_{Bi}$) of each of the two high ($T_{Hi}$) and low ($T_{Bi}$) switches of the inverter, associated with each winding ($L_i$) of the motor (1), using a width modulated pulse chopping strategy, as a function of the difference between the current actually measured in the windings and the corresponding reference currents,

characterized in that it comprises the following additional steps c) and d):

c) detection of the winding ($L_i$) of the motor in which the absolute value of the instantaneous reference current ($I_{Ri}$) is maximum;

d) transmission of a conduction holding order to the high ($T_{Hi}$) or low ($T_{Bi}$) switch of the inverter associated with the winding ($L_i$) of the motor (1) in which a maximum current in absolute value is detected, the current flowing in this winding being then regulated by the N-1 other arms.

2. Control method according to claim 1, characterized in that in step c) detection of the winding in which a maximum current in absolute value flows is provided from the sign of the currents in the different windings of the motor (1).

3. Control method according to the preamble of claim 1, for controlling an inverter associated with a synchronous motor, with step b) and step a) modified as follows :

a) in which the establishment of the N reference currents ($I_{Ri}$) takes place as a function of the current reference (I) to be applied to the rotor, and step b),

characterized in that it comprises the following steps c, $c_1$ and d :

c) detection of the winding ($L_i$) of the motor in which the absolute value of the instantaneous current is maximum as a function of the angular position ($\theta$) of the rotor;

$c_1$) enabling of the control method after comparison of the absolute value of the current reference (|I|) with a minimum given threshold ($I_L$) and comparison of the absolute value of the speed of the rotor (|v|) with a maximum given threshold ($v_S$) when the motor is braking, braking being determined by comparing the signs of the speed (v) and the current reference (I);

d) transmission of an order for holding under conduction the high ($T_{Hi}$) or low ($T_{Bi}$) switch of the inverter associated with the winding ($L_i$) of the motor (1) in which a maximum current in absolute value is detected, the current then being regulated by the N-1 other arms.

4. Control method according to claim 3, characterized in that in step c) detection of the phase in which the absolute value of the current is maximum is provided by a sensor detecting the angular position (12) of the rotor.

5. Device for controlling a pulse width modulation inverter having N phases, N being an integer greater than 2, associated with a synchronous motor (1) comprising :

- means (2) for establishing N reference currents ($I_{Ri}$) - i being an integer varying from 1 to N - to be caused to flow in the N windings ($L_i$) of the motor, from the current reference (I) to be applied thereto;

- means (3) for establishing the conduction signals ($C_{Hi}$ and $C_{Bi}$), of each of the two high and low ($T_{Bi}$) switches of the inverter associated with each winding ($L_i$) of the motor ($T_{Hi}$);

characterized in that it further comprises :

- means (7) for detecting the winding ($L_i$) of the motor in which the absolute value of the instantaneous reference current ($I_{Ri}$) is maximum, as a function of the angular position ($\theta$) of the rotor;

- means (8) for enabling the control method which compare the absolute value of the current reference (|I|) with a maximum given threshold ($I_1$) and compare the absolute value (|v|) of the speed of the rotor with a maximum threshold ($v_S$) when the motor is braking, braking being detected by comparing the sign of the current reference and the sign of the speed;

- means for holding under conduction the high ($T_{Hi}$) or low ($T_{Bi}$) switch of the inverter associated with the winding ($L_i$) of the motor in which a maximum current is detected.

6. Control device according to claim 5, characterized in that the detection means (7) operate from the sign of the currents in the different windings ($L_i$) of the motor.

7. Control device according to claims 5 or 6, characterized in that the conduction holding means (9) are formed by a binary-decimal decoding circuit receiving at the input the bit codes defining the signs of the currents of the rotor and the order for enabling the control method.

8. Control device according to one of claims 5 to 7, characterized in that it further comprises a processor (11) for detecting the winding ($L_i$) of the motor in which the maximum current flows and for enabling the control method, associated with an A-D converter (10), the converter receiving at its input the values of the reference currents of at least two windings of the motor (1), the value of the current reference (I) and the value of the speed of rotation of the rotor and the processor (11) transmitting the conduction initiation signals to the switches ($T_{Hi}$ and $T_{Bi}$) in accordance with the control method.

9. Control device according to claim 8, used for a synchronous motor, characterized in that the detection of the winding in which the current is maximum is provided by a sensor (12) detecting the angular position of the rotor of the motor, this sensor being connected directly to the processor.

## Patentansprüche

1. Verfahren zur Steuerung, je nach den elektrischen Kennzeichen eines Motors und seiner Betriebsweise, eines diesem Motor zugeordneten pulsbreitenmodulierten Wechselrichters mit N Zweigen - wobei N eine ganze Zahl ist, die grösser ist als zwei -, der sternförmig angeschlossen ist ohne Anschluss des Nulleiters, wobei das Verfahren die folgenden Etappen a) und b) aufweist :

   a) die Erstellung von N Referenzströmen ($I_{Ri}$) - wobei i eine ganze Zahl zwischen 1 und N ist -, die jeweils den N Wicklungen ($L_i$) des Motors (1) zugeordnet werden ;
   b) die Ausarbeitung von Leitsignalen ($C_{Hi}$ und $C_{bi}$) für jeden der beiden oberen ($T_{Hi}$) und unteren ($T_{Bi}$) jeder Wicklung ($L_i$) des Motors (1) zugeordneten Schalter des Wechselrichters, gemäss einer Zerlegstrategie mittels breitenmodulierter Pulse, je nach der Differenz zwischen dem tatsächlich in den Windungen gemessenen Strom und den entsprechenden Referenzströmen, dadurch gekennzeichnet, dass es die folgenden zusätzlichen Etappen aufweist :
   c) Erfassung der Motorwicklung ($L_i$), in welcher der absolute Momentanreferenzstromwert ($I_{Ri}$) am höchsten ist ;
   d) Übermittlung eines Befehls zur Aufrechterhaltung der Leitfähigkeit an den oberen ($T_{Hi}$) oder unteren ($T_{Bi}$) Schalter des der Wicklung ($L_i$) des Motors zugeordneten Wechselrichters, in dem ein absoluter Maximalstromwert erfasst wurde, wobei der in dieser Wicklung fliessende Strom dann von den N-1 anderen Zweigen reguliert wird.

2. Steuerverfahren nach Anspruch 1, dadurch gekennzeichnet, dass in Etappe c) die Erfassung der Wicklung, in welcher ein absoluter Maximalstrom fliesst, ausgeht vom Zeichen der in den verschiedenen Wicklungen des Motors (1) fliessenden Ströme.

3. Verfahren gemäss der Einleitung von Anspruch 1, zur Steuerung eines einem Synchronmotor zugeordneten Wechselrichters, in welchem die Etappen b) und a) wie folgt abgeändert sind :

   a) die Erstellung der N Referenzströme ($I_{Ri}$) erfolgt gemäss der auf den Rotor anzuwendenden Stromreferenz (I) und Etappe b), dadurch gekennzeichnet, dass es folgende Etappen c), $c_1$) und d) aufweist :
   c) Die Erfassung der Motorwicklung ($L_i$), in welcher der absolute Momentanstromwert im Verhältnis zur Winkelposition ($\theta$) des Rotors maximal ist,
   ($c_1$ die Gültigmachung des Steuerverfahrens nach Vergleich des absoluten Stromreferenzwertes ($|I|$) mit einem bestimmten Minimalschwellenwert ($I_L$) und Vergleich des Absolutwertes der Rotorgeschwindigkeit ($|v|$) mit einem bestimmten Maximalschwellenwert ($v_S$), wenn der Motor bremst, wobei die Bremsung ermittelt wird durch Vergleich der Zeichen für die Geschwindigkeit (v) mit der Stromreferenz (I).
   d) die Übermittlung eines Befehls zur Aufrechterhaltung der Leitfähigkeit des oberen ($T_{Hi}$) oder unteren ($T_{Bi}$) Schalters des der Wicklung ($L_i$) des Motors (1) zugeordneten Wechselrichters, in dem ein absoluter Maximalstromwert erfasst wurde, wobei der Strom dann von den N-1 anderen Zweigen reguliert wird.

4. Steuerverfahren nach Anspruch 3, dadurch gekennzeichnet, dass in Etappe c) die Erfassung der Phase, in welcher der absolute Stromwert maximal ist, durch einen Erfasser der Winkelposition (12) des Rotors erfolgt.

5. Vorrichtung zur Steuerung eines pulsbreitenmodulierten Wechselrichters mit N Phasen - wobei N eine ganze Zahl ist, die grösser ist als zwei - und diese Vorrichtung einem Asynchronmotor (1) zugeordnet ist und aufweist :

   - Mittel (2) zur Erstellung der N Referenzströme ($I_{Ri}$) - wobei i eine ganze Zahl zwischen 1 und N ist -, die in die N Wicklungen ($L_i$) des Motors eingegeben werden sollen, ausgehend von der einzugebenden Stromreferenz (I) ;
   - Mittel (3) zur Ausarbeitung der Leitsignale ($C_{Hi}$ und $C_{Bi}$) für jeden der beiden oberen ($T_{Hi}$) und unteren ($T_{Bi}$) Schalter des jeder Wicklung ($L_i$) des Motors zugeordneten Wechselrichters,

dadurch gekennzeichnet, dass sie ausserdem aufweist :

- Mittel (7) zur Erfassung der Motorwicklung ($L_i$), in welcher der absolute Momentanreferenzstromwert ($I_{Ri}$) maximal ist, gemäss der Winkelposition ($\theta$) des Rotors ;
- Mittel (8) zur Gültigmachung des Steuerverfahrens, welche den absoluten Stromreferenzwert ($|I|$) mit einem bestimmten Maximalschwellenwert ($I_1$) vergleichen und den absoluten Geschwindigkeitswert ($|v|$) des Rotors mit einem Maximalschwellenwert ($v_S$), wenn der Motor bremst und die Bremsung ermittelt wird durch Vergleich des Zeichens der Stromreferenz mit dem Zeichen der Geschwindigkeit ;
- Mittel zur Aufrechterhaltung der Leitfähigkeit des oberen ($T_{Hi}$) oder unteren ($T_{Bi}$) Schalters des der Motorwicklung ($L_i$) zugeordneten Wechselrichters, in dem ein Maximalstrom erfasst wurde.

6. Steuervorrichtung nach Anspruch 5, dadurch gekennzeichnet, dass die Erfassungsmittel (7) ausgehend vom Zeichen der Ströme in den verschiedenen Motorwicklungen ($L_i$) funktionieren.

7. Steuervorrichtung nach den Ansprüchen 5 oder 6, dadurch gekennzeichnet, dass die Mittel (9) zur Aufrechterhaltung der Leitfähigkeit von einem Binär-Dezimalkodierer gebildet werden, in den die Binärcodes eingegeben werden, welche die Zeichen der Rotorströme und die Gültigmachungsordnung des Steuerverfahrens definieren.

8. Steuervorrichtung nach einem der Ansprüche 5 bis 7, dadurch gekennzeichnet, dass es ausserdem einen Prozessor (11) aufweist, der die Motorwicklung ($L_i$) erfasst, in welcher der Maximalstrom fliesst und das Steuerverfahren gültigmacht, und einen zugeordneten Analog-Digitalumsetzer (10), wobei in den Umsetzer die Referenzstromwerte von mindestens zwei Wicklungen des Motors (1), der Stromreferenzwert (I) und der Drehgeschwindigkeitswert des Rotors eingegeben werden und der Prozessor (11) je nach dem Steuerverfahren den Schaltern ($T_{Hi}$ und $T_{Bi}$) die Signale zur Herstellung der Leitfähigkeit übermittelt.

9. In einem Synchronmotor verwendete Steuervorrichtung nach Anspruch 8,

dadurch gekennzeichnet, dass die Erfassung der Wicklung, in welcher der Strom einen Maximalwert aufweist, durch einen Erfasser (12) erfolgt, welcher die Winkelposition des Motorrotors erfasst und besagter Erfasser direkt an den Prozessor angeschlossen ist.

FIG.1

EP 0 241 326 B1

FIG.2b

FIG.2a

FIG.3a

FIG.3b

A — freinage $(v) > v_S$ | freinage $(v) < v_S$ | B — accélération

EP 0 241 326 B1

FIG.4

EP 0 241 326 B1